# EUROPEAN PATENT APPLICATION

(11) **EP 4 844 411 A1**
(43) Date of publication of application: **25.11.2026**
(21) Application number: 25741901.0
(22) Date of filing: 10.01.2025
(51) Int. Cl.: G01N 35/00

(54) **AUTOMATED ANALYSIS DEVICE AND REAGENT REGISTRATION METHOD FOR SAME**

(30) Priority: 18.01.2024 JP 2024005733
(71) Applicant: Hitachi High-Tech Corporation, Minato-ku Tokyo 105-6409 (JP)
(72) Inventor: SASAOKA, Kazuma, Tokyo 105-6409 (JP)
(74) Representative: MERH-IP Matias Erny Reichl Hoffmann Patentanwälte PartG mbB
(86) International application number: PCT/JP2025/000660
(87) International publication number: WO 2025/154675

(57) **Abstract**

[Problem]

To provide an automatic analyzer that enhances the utilization efficiency of a reagent by prompting a user to use a partially used reagent container.

[Solution]

An automatic analyzer of the present convention includes: a reagent holding part that holds a plurality of reagent containers for storing reagents; a reading part that reads reagent information including kinds of the reagents based on identifiers attached to the reagent containers; a storage part that stores the reagent information of the partially used reagent container; and a control unit that determines the presence or non-presence of the partially used reagent container for storing a reagent of a same kind as a reagent that is stored in the unopened reagent container by referencing the storage part when the reagent information is read from the identifier attached to the unopened reagent container. The control unit performs a control so as to assign priority to a use of the partially used reagent container than the unopened reagent container in a case where the partially used reagent container for storing the same kind of reagent exists.

## Description

### Technical Field

The present invention relates to an automatic analyzer and a reagent registration method used in the automatic analyzer.

### Background Art

Patent Literature 1 discloses an automatic analyzer that secures data reliability in the analytical process, and prevents unnecessary consumption of the reagent and standard solution by temporarily keeping the reagent bottle that has been set in an analysis unit, and partially used for the analysis in the refrigerator or the like at the end of the day, and securely setting such reagent bottle again in the same analysis unit upon resumption of the use.

### Citation List

### Patent Literature

Patent Literature 1: Japanese Unexamined Patent Application Publication No. 2002-48800

### Summary of Invention

### Technical Problem

Patent Literature 1, however, does not consider the situation where, besides the partially used reagent container (reagent bottle) that has been temporarily kept, there is kept another unopened reagent container that stores the reagent of the same kind as the reagent stored in the reagent container. There may be the cases where the user opens the fresh reagent container unintentionally in spite of presence of the partially used reagent container. As the number of opened reagent containers increases, it becomes difficult to consume all reagents before the expiration date, leading to unnecessary consumption of the reagent.

An object of the present invention is to provide the automatic analyzer that enhances the utilization efficiency of a reagent by prompting a user to use a partially used reagent container.

### Solution to Problem

In order to solve the above-described problem, the automatic analyzer according to the present invention includes a reagent holding part that holds a plurality of reagent containers for storing reagents, a reading part that reads reagent information including kinds of the reagents based on identifiers attached to the reagent containers, a storage part that stores the reagent information of the partially used reagent container, and a control unit that determines the presence or non-presence of the partially used reagent container for storing a reagent of a same kind as a reagent that is stored in the unopened reagent container by referencing the storage part when the reagent information is read from the identifier attached to the unopened reagent container. The control unit performs a control so as to assign priority to the use of the partially used reagent container over the unopened reagent container in a case where the partially used reagent container for storing the same kind of reagent exists.

### Advantageous Effects of Invention

The present invention provides the automatic analyzer which prompts the user to use the partially used reagent container to improve utilization efficiency of the reagent.

### Brief Description of Drawings

Fig. 1 is a front view schematically illustrating an automatic analyzer and a storage box.
Fig. 2 is a top view of an analyzing part.
Fig. 3 is a perspective view illustrating the configuration of a reagent container.
Fig. 4 is a flowchart illustrating processing of an automatic analyzer at the time of installing the reagent container and an operation of a user.
Fig. 5 illustrates an example of a list screen of partially used reagents according to a first embodiment
Fig. 6 is a view illustrating a state where a pull-down menu for narrowing down the reagents is displayed on the list screen of the partially used reagents.
Fig. 7 is a view illustrating a state where the reagents are narrowed down in the list screen of the partially used reagents.
Fig. 8 is an example of a reagent reading screen.
Fig. 9 is an example of a registered confirmation screen of the reagents according to the first embodiment.
Fig. 10 is an example of a registration recommendation screen of preparatory reagents.
Fig. 11 illustrates an example of a list screen of partially used reagents according to a second embodiment.
Fig. 12 is an example of a registration confirmation screen of the reagents according to the second embodiment.

### Description of Embodiments

Embodiments according to the present invention will be described with reference to the drawings.

### <First Embodiment>

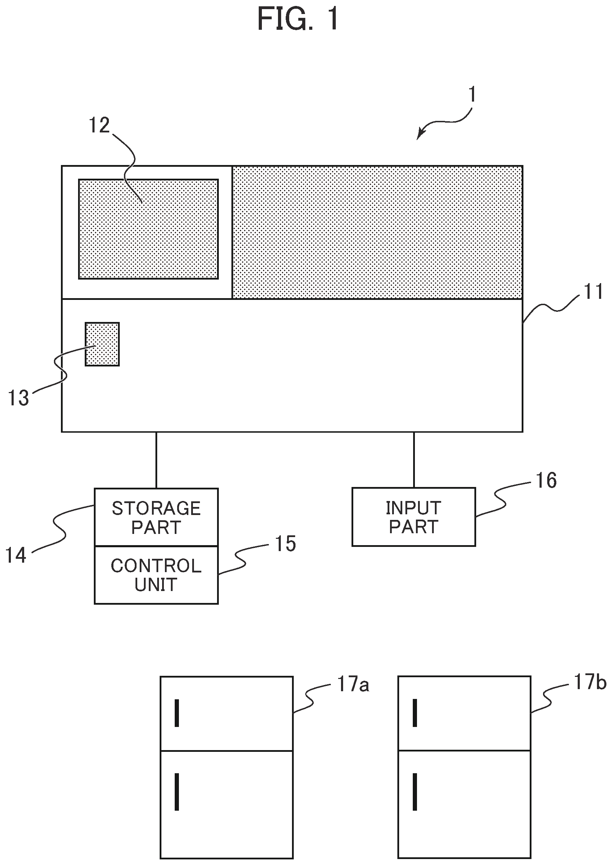

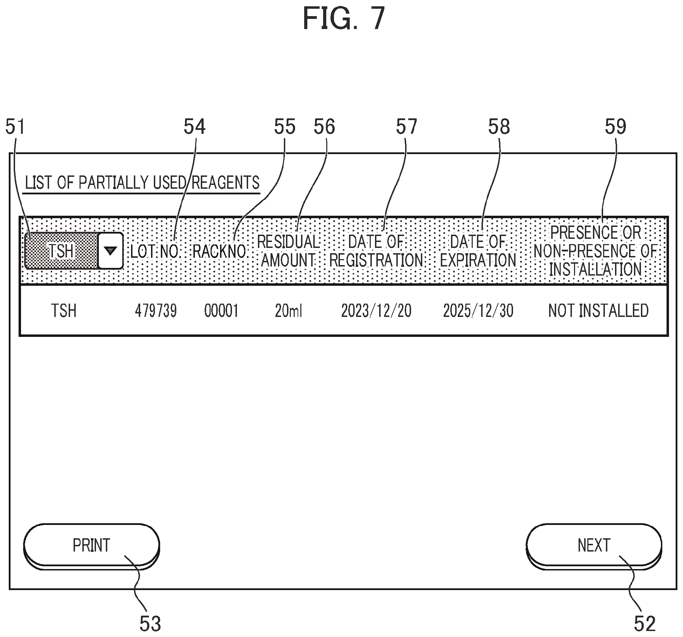

An automatic analyzer according to a first embodiment is described with reference to Fig. 1 to Fig. 10.

Fig. 1 is a front view schematically illustrating the automatic analyzer and a storage box. An automatic analyzer 1 includes a tag reader 13 (reading part), an analyzing part 11, an output part 12, an input part 16, an storage part 14 and a control unit 15. Storage boxes 17a, 17b store reagent containers to be used for the automatic analyzer 1.

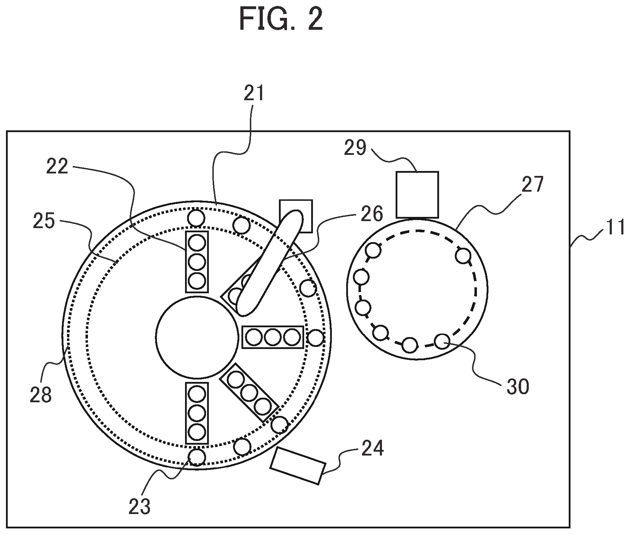

The tag reader 13 reads an IC tag (hereinafter simply referred to as a tag) as an identifier attached to the reagent container. If the identifier attached to the reagent container is an RFID tag and a 2D barcode other than the IC tag, a device that can read the identifier is used as the reading part. The analyzing part 11 analyzes components of a sample (biological samples such as blood and urine). Details of the description will be made later with reference to Fig. 2. For example, the output part 12 is a display for displaying such screen relating to the state of the automatic analyzer 1, analytical items/results, and advice/warning to users. The input part 16 like keyboard and mouse receives an input by a user for setting or selecting a predetermined item. The output part 12 and the input part 16 may be integrally formed into a touch panel, for example. The storage part 14 stores an operation sequence, analytical result, reagent information (for example, presence/non-presence of the partially used reagent as described later), and is composed of a storage device such as HDD. The control unit 15 constituted by, for example, CPC and MPU is connected to the above-described respective components that constitute the automatic analyzer 1 for controlling operations of the respective components, and displaying the screen on the output part 12.

Each of the storage boxes 17a, 17b has a cold retention function. The following description is made on the assumption that the automatic analyzer 1 according to the embodiment does not perform a cold retention function for reagent after shutdown. In response to shutdown of the automatic analyzer 1, the user is required to take the reagent container out of the automatic analyzer 1, and to transfer such reagent container into the storage boxes 17a, 17b. Upon shutdown of the automatic analyzer 1 by the user, it is desirable to output the display and sound from the output part 12 to prompt removal of the reagent container. Although two storage boxes 17a, 17b are illustrated in Fig. 1, the number of the storage boxes is not limited to this.

Fig. 2 is a top view of an analyzing part. The analyzing part 11 includes a reagent sample disc 21 (SR disc), a reaction disc (incubator) 27, a bar code reader 24, a dispensing mechanism 26 and a spectrophotometer 29.

The reagent sample disc 21 includes a reagent holding part 25 that holds a plurality of reagent containers 22 each containing the reagent, and a sample holding part 28 that holds a plurality of sample containers 23 each containing the sample. The reagent sample disc is rotated by a driving mechanism (not shown). The reagent holding part 25 is disposed on an inner diameter side of the reagent sample disc 21. The sample holding part 28 is disposed on an outer diameter side of the reagent sample disc 21. The sample holding part 28 is transportable independently of the reagent holding part 25.

The reaction disc 27 on which a plurality of reaction vessels 30 are disposed circumferentially is rotated by the driving mechanism (not shown). The bar code reader 24 is located around the reagent sample disc 21 to read the bar code attached to the sample container 23.

The dispensing mechanism 26 disposed between the reagent sample disc 21 and the reaction disc 27 is rotatable and vertically movable. When dispensing the reagent, the dispensing mechanism 26 aspirates the reagent from the reagent container 22 at a reagent aspiration position on the reagent sample disc 21, and discharges the aspirated reagent to the reaction vessel 30 at a dispensing position on the reaction disc 27. When dispensing the sample, the dispensing mechanism 26 aspirates the sample from the sample container 23 at a sample aspiration position on the reagent sample disc 21, and discharges the aspirated sample to the reaction vessel 30 at the dispensing position on the reaction disc 27.

The spectrophotometer 29 located around the reaction disc 27 performs measurements for biochemical examinations. The spectrophotometer 29 is provided with a light source or a detector (not shown), and configured to measure absorbance of the reaction solution by dispersing transmitted light derived from irradiating the reaction solution as mixture of the reagent and the sample with the light source, and detecting the dispersed transmitted light. Measurement results of the spectrophotometer 29 are transmitted to the control unit 15. Based on the measurement results, the control unit 15 calculates concentration of components of the sample. In place of, or in addition to the spectrophotometer 29, it is possible to provide a detector using a photomultiplier tube, as a detection mechanism for immunological examination, for detecting a luminescence amount derived from a light-emitting reaction of a labeled substance that is contained in the reaction solution that has been reacted on the reaction disc 27 for a predetermined period of time.

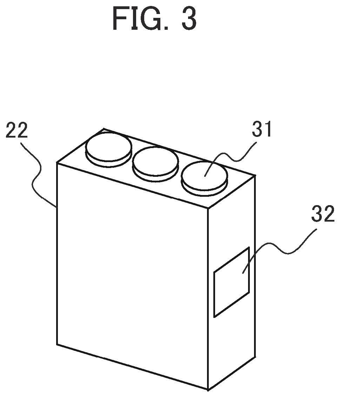

Fig. 3 is a perspective view illustrating the configuration of the reagent container. As illustrated in Fig. 3, the reagent container 22 has a cuboid shape, and has a plurality of upwardly protruding opening portions 31 formed on the upper surface of the reagent container to allow access of the dispensing mechanism 26 to the reagent. A tag 32 is attached to one of short side surfaces of the reagent container. The tag 32 records reagent information including kinds of the reagent to be stored in the reagent container 22. The reagent information includes, for example, the kind of reagent, lot number, individual identification number, residual amount of reagent, the number of tests, reagent container usage start date, and expiration date of reagent. As described above, the identifier attached to the reagent container 22 may be the RFID tag, the 2D bar code, and the like.

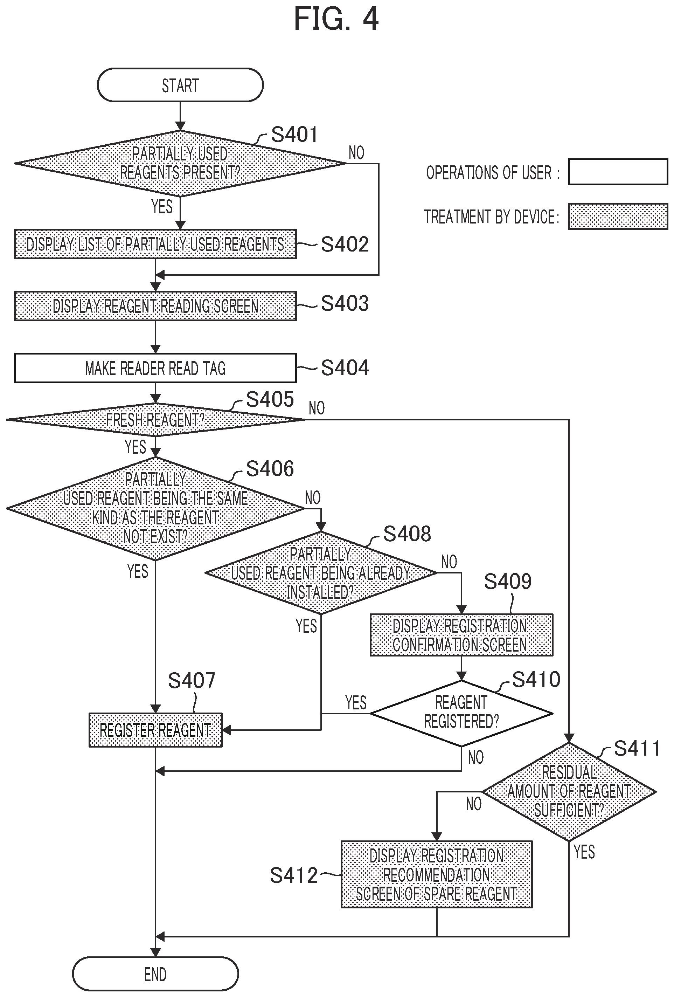

Fig. 4 is a flowchart illustrating processing of the automatic analyzer at the time of installing the reagent container and the operation of a user. Referring to Fig. 4, steps S404 and S410 correspond to the user's operations, and other steps correspond to processes executed by the automatic analyzer 1 (control unit 15).

Upon the use of a fresh reagent, the user registers the reagent for the automatic analyzer 1. After registration of the reagent, users themselves are expected to open the reagent container before installation of such reagent container onto the reagent holding part 25. However, it is possible to automatically open the reagent container by the automatic analyzer, or open the reagent container before registration of the reagent. The processing for the reagent registration to be executed by the automatic analyzer is started by the user who performs predetermined operations through the input part 16 while looking at the predetermined screen displayed on the output part 12. Upon start of the reagent registration process, the control unit 15 references the storage part 14 to determine the presence or non-presence of the partially used reagent (opened reagent container) irrespective of the situation where it has been already installed onto the reagent holding part 25, or stored in the storage box 17 (step S401).

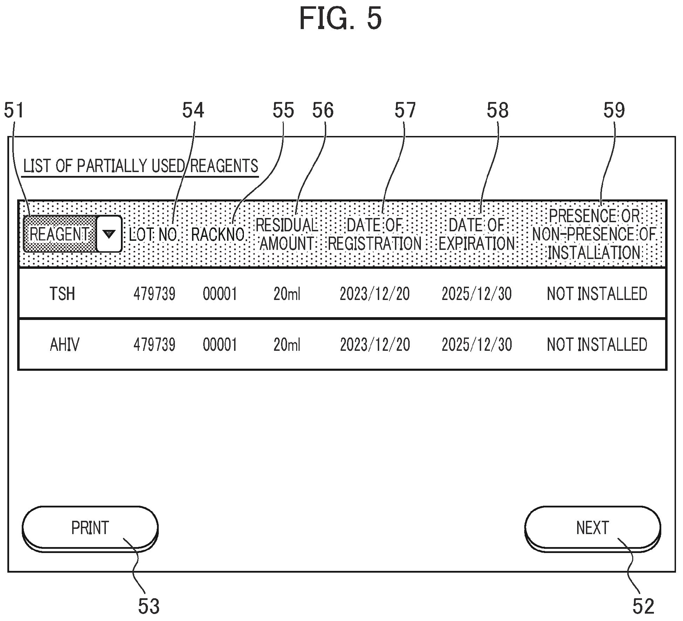

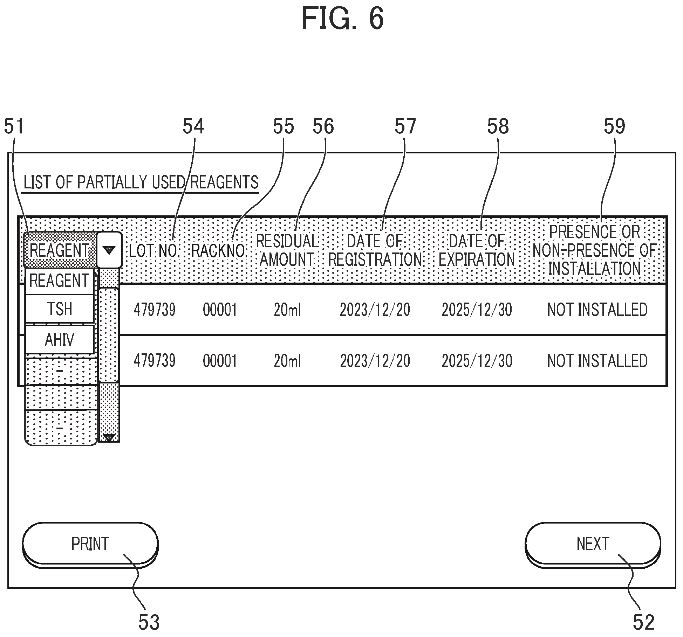

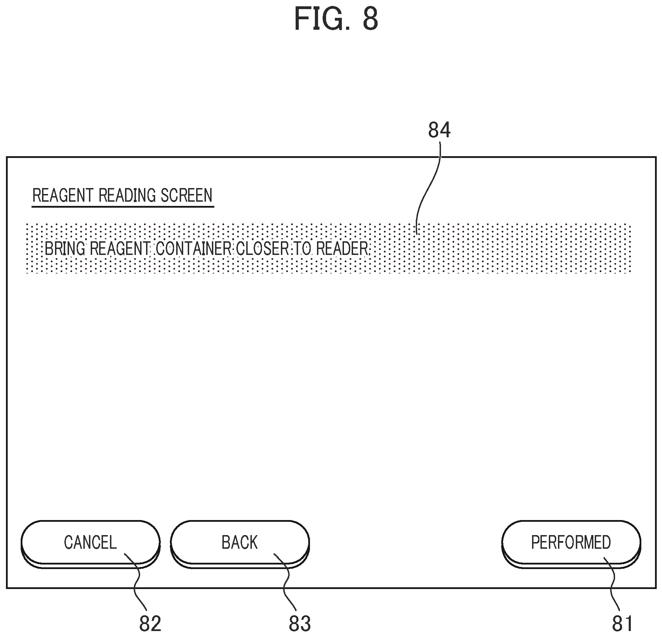

If the presence of the partially used reagent is determined, the control unit 15 displays a list screen of the partially used reagent on the output part 12 (step S402). Fig. 5 illustrates an example of the list screen of the partially used reagents according to the first embodiment. As illustrated in Fig. 5, the list screen of the partially used reagents includes a reagent selection tab 51 for narrowing down by the reagent, a lot number 54 as identification information for each reagent container, a rack number 55 as identification information for each rack on which the reagent container is placed, a reagent residual amount 56, a reagent registered date 57, a valid period 58, presence or non-presence of installation onto the reagent holding part 59, a next-to button 52 for moving to the next screen (reagent reading screen as illustrated in Fig. 8), and a printing button 53 for printing an image of the screen. When the user taps the reagent selection tab 51 by operating the input part 16, a reagent pull-down menu that lists narrowing down candidates is displayed as illustrated in Fig. 6. In response to selection of the predetermined reagent by the user, a list screen of the reagent narrowed down from those partially used is only displayed.

As illustrated in Fig. 5 to Fig. 7, when the next-to button 52 is tapped, or it is determined in step S401 that there is no partially used reagent, the control unit 15 displays the reagent reading screen on the output part 12 (step S403). Fig. 8 illustrates an example of the reagent reading screen. As illustrated in Fig. 8, the reagent reading screen includes a message 84 that prompts the user to bring the reagent container close to the tag reader to read the reagent information, a carry-out button 81, a cancellation button 82 for cancelling the reagent registration process, and a return button 83 for moving to the previous screen. Then the user taps the carry-out button 81 for reading, and brings the reagent container close to the tag reader to read the reagent information of the tag (step S404). It is possible to set the timing at which the user takes the reagent container out of the storage box to the one either after or before tapping the carry-out button 81 for reading.

Based on the read reagent information, the control unit 15 determines whether or not the reagent is fresh, that is, the reagent container is unopened.(step S405). If it is determined that the reagent is fresh, the control unit 15 determines with respect to presence of the partially used reagent of the same kind as the subject reagent by referencing the storage part 14 (step S406). If there is no partially used reagent of the same kind, the control unit 15 registers the subject reagent, and stores the reagent information of such reagent in the storage part 14 (step S407).

Meanwhile, in step S406, if there is the partially used reagent of the same kind, the control unit 15 determines whether or not the reagent container that stores the partially used reagent has been already installed on the reagent holding part 25 (step S408). The determination whether or not the partially used reagent has been installed may be made by executing the process for determining whether or not the tag 32 of the opened reagent container has been read by the tag reader 13, whether or not the user inputs the information on the installation, or whether or not the tag 32 of the reagent container on the reagent holding part 25 has been automatically read by the tag reader additionally provided on the reagent sample disc 21. In step S408, if it is determined that the partially used reagent has been installed, the control unit 15 registers the reagent and stores reagent information on the subject reagent in the storage part 14 without displaying the information indicating the presence of the partially used reagent of the same kind on the output part 12 (step S407). This is thought to be because, in the case where the partially used reagent has been installed on the reagent holding part 25, the user desires registration of the fresh reagent although presence of the partially used reagent is noticed.

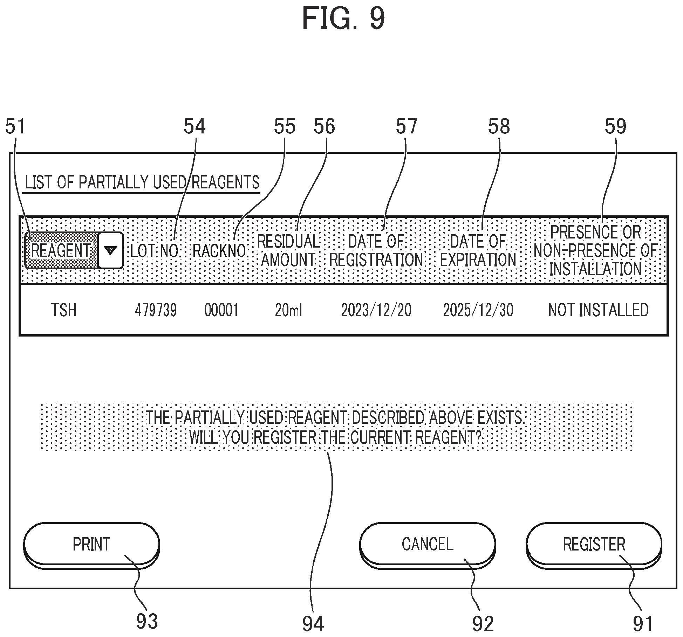

If it is determined that the partially used reagent has not been installed in step S408, the control unit 15 displays the registration confirmation screen on the output part 12 (step S409). Fig. 9 is an example of the registered confirmation screen of the reagents according to the first embodiment. As illustrated in Fig. 9, the registration confirmation screen displays a message 94 that informs the user of the presence of the partially used container that stores the reagent of the same kind, and prompts the user to confirm the reagent registration together with the information on the partially used reagent (Lot No. 54). The registration confirmation screen includes a carry-out button 91 for reagent registration, a cancellation button 92 for canceling the reagent registration process, and a printing button 93 for printing an image of the screen. The user confirms the registration confirmation screen, and then determines whether or not it is necessary to register the fresh reagent that has been read (step S410).

If the partially used reagent of the same kind displayed on the screen is overlooked in step S402, the user taps the cancellation button 92 to cancel registration of the fresh reagent registration, and further takes the partially used reagent (opened reagent container) out of the storage box. The partially used reagent is then installed on the reagent holding part 25. This makes it possible to prevent increase in the number of opened reagent containers by the user who opens the fresh reagent container unintentionally in spite of presence of the partially used reagent container in the storage box. As a result, it becomes easy to effectively use up each of the reagents before the expiration date, leading to saving of the reagent consumption. Meanwhile, if the user who is aware of presence of the partially used reagent in the storage box desires to use the unopened reagent container, the carry-out button 91 is tapped to instruct registration of the fresh reagent. In this case, the control unit 15 registers the fresh reagent and stores the reagent information on the subject reagent in the storage part 14.(step S407).

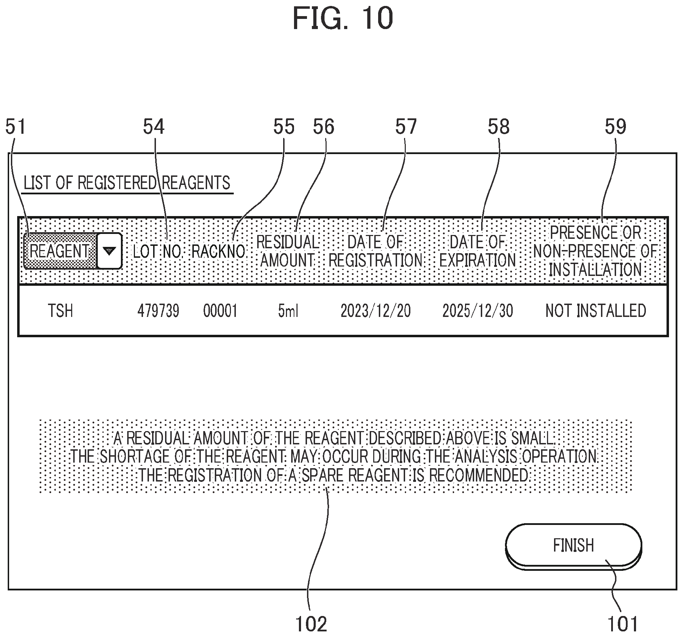

In step S405, if it is determined that the reagent is not fresh, that is, the reagent is partially used, the control unit 15 determines whether or not the residual amount of the reagent in the reagent container having its tag read is equal to or larger than a predetermined value (step S411). If the residual amount of the reagent is equal to or larger than the predetermined value, it is determined that the residual amount is sufficient for analysis. The user then directly installs the reagent container on the reagent holding part 25. Meanwhile, if the residual amount of the reagent is smaller than the predetermined value, the reagent may run short during analysis. The control unit 15 then displays the registration recommendation screen of a preparatory reagent on the output part 12 (step S412). Fig. 10 is an example of the registration recommendation screen of the preparatory reagents. As illustrated in Fig. 10, the registration recommendation screen displays an advice 102 that prompts the user to register, as the preparatory reagent, and install the unopened reagent container that stores the reagent of the same kind as the partially used reagent with the read tag on the reagent holding part 25 together with the partially used reagent information (Lot No. 54). The registration recommendation screen includes a finish button 101. Upon tapping of the finish button 101, the control unit 15 finishes execution of the process.

As illustrated in Fig. 5 to Fig. 7, in this embodiment, the user is informed of the partially used reagent information before reading the tag. In the presence of the partially used reagent of the same kind as the reagent stored in the unopened reagent container, which is to be registered by the user, it is possible to make the user aware of the partially used reagent of the same kind in an earlier stage before reading the tag. As a result, it is possible to avoid unnecessary work for the user to take the unopened reagent container out of the storage box, and bring it close to the tag reader in spite of the presence of the consumed reagent.

### <Second Embodiment>

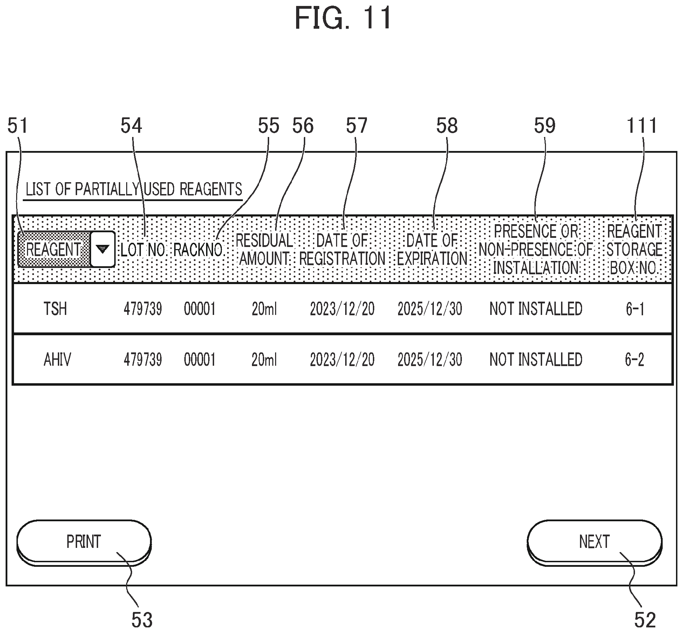

The automatic analyzer according to a second embodiment is described with reference to Fig. 11 to Fig. 12. In the second embodiment, the list screen of partially used reagents displays the information for identifying the storage box that stores the opened reagent container containing the partially used reagent. This feature is different from the one as described in the first embodiment. The structure of the automatic analyzer according to the second embodiment, and processing to be executed upon installation of the reagent container are similar to those described in the first embodiment.

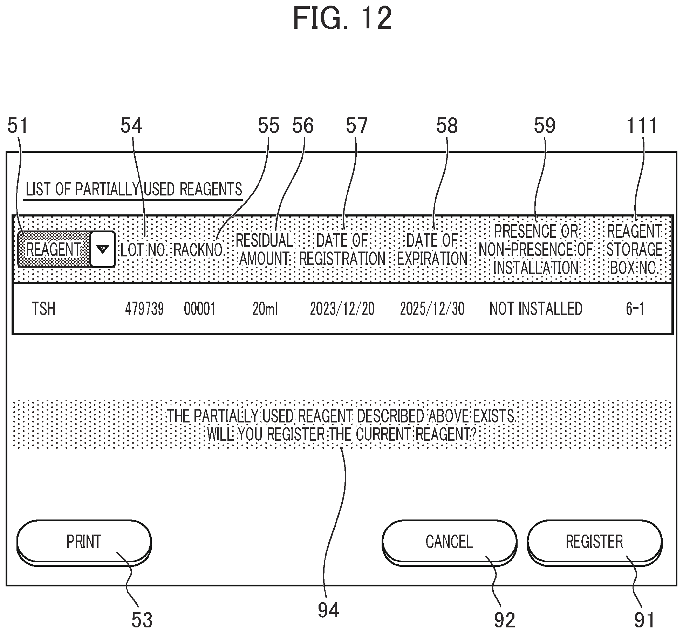

Fig. 11 illustrates an example of a list screen of partially used reagents according to the second embodiment, which corresponds to Fig. 5 of the first embodiment. Fig. 12 illustrates an example of a registration confirmation screen of the reagent according to the second embodiment, which corresponds to Fig. 9 of the first embodiment. As illustrated in Fig. 11 and Fig. 12, a reagent storage box number 111 is displayed as the storage location of the partially used reagent. This allows the user to easily search for the reagent container among a plurality of storage boxes as the storage locations. The storage location of the partially used reagent is stored in the storage part 14. The user is allowed to preliminarily specify the storage location for each reagent, or to input the storage location upon the reagent registration.

The present invention is not limited to each embodiment described above, and further includes various modifications. In the respective embodiments, the automatic analyzer does not have the cold retention function. Accordingly, the user is required to keep the partially used reagent in the storage box after shutdown of the automatic analyzer. Even in the case where the automatic analyzer has the cold retention function, if there is no room for the storage location in the automatic analyzer, the partially used reagent has to be kept in the storage box. Thus, the present invention is effective for the automatic analyzer having the cold retention function. Furthermore, in the respective embodiments, if the unopened reagent container is read by the tag reader in the presence of the partially used reagent container that stores the reagent of the same kind, the control unit 15 causes the output part 12 to output such information accordingly. It is possible to determine with respect to presence or non-presence of the unopened reagent container in step S401. The control unit 15 may be structured to prevent registration of the unopened reagent container without outputting the information on the presence of the partially used reagent container to the output part 12 such that the partially used reagent container is preferentially used.

### List of Reference Signs

- 1: automatic analyzer
- 11: analyzing part
- 12: output part
- 13: tag reader
- 14: storage part
- 15: control unit
- 16: input part
- 17a, 17b: storage box
- 21: regent sample disc
- 22: reagent container
- 23: sample container
- 24: bar code reader
- 25: reagent holding part
- 26: dispensing mechanism
- 27: reaction disc
- 28: sample holding part
- 29: spectrophotometer
- 30: reaction vessel
- 31: opening portion
- 32: tag
- 51: reagent selection tab
- 52: next-to button
- 53: printing button
- 54: lot number
- 55: rack number
- 56: residual amount
- 57: registered date
- 58: valid period
- 59: presence or non-presence of installation
- 81: carry-out button
- 82: cancellation button
- 83: return button
- 84: message
- 91: carry-out button
- 92: cancellation button
- 93: printing button
- 94: message
- 101: finish button
- 102: advice
- 111: reagent storage box number

## Claims

1. An automatic analyzer comprising:
a reagent holding part that holds a plurality of reagent containers for storing reagents;
a reading part that reads reagent information including kinds of the reagents based on identifiers attached to the reagent containers;
a storage part that stores the reagent information of the partially used reagent container, and
a control unit that determines the presence or non-presence of the partially used reagent container for storing a reagent of a same kind as a reagent that is stored in the unopened reagent container by referencing the storage part when the reagent information is read from the identifier attached to the unopened reagent container, wherein
the control unit performs a control so as to assign priority to a use of the partially used reagent container than the unopened reagent container in a case where the partially used reagent container for storing the same kind of reagent exists.

2. The automatic analyzer according to claim 1, further comprising
an output part where, when the partially used reagent container for storing the same kind of reagent exists, the output part outputs accordingly.

3. The automatic analyzer according to claim 2, wherein
in a case where the partially used reagent container exists, the control unit displays a list screen of the partially used reagent container on the output part and, thereafter, control unit makes output part display a read screen that prompts a user to perform the reading of the reagent information such that the reagent information is read.

4. The automatic analyzer according to claim 3, wherein
the list screen includes information specifying a storage box for storing the partially used reagent container.

5. The automatic analyzer according to claim 2, wherein
even in a case where the partially used reagent container for storing the same kind of reagent exists, when the reagent container already exists in the reagent holding part, the output part does not output accordingly.

6. The automatic analyzer according to claim 1, wherein
in a case where the partially used reagent container for storing the same kind of reagent does not exist, the control unit stores the reagent information read from the identifier to the storage part.

7. The automatic analyzer according to claim 6, further comprising
an input part that receives an input by a user, wherein
when the input part receives input from a user that instructs a use of the unopened reagent container even when the partially used reagent container for storing the same kind of reagent exists, the control unit stores the reagent information read from the identifier in the storage part.

8. The automatic analyzer according to claim 2, wherein
in a case where the reagent information is read from the identifier that is attached to the partially used reagent container, and a residual amount of the reagent in the reagent container is less than a predetermined value, the control unit makes the output part output an advice to prompt a user to install the unopened reagent container for storing a reagent of the same kind as the reagent.

9. The automatic analyzer according to claim 1, wherein
the automatic analyzer does not have a function of keeping cooling of the reagent after the automatic analyzer is shutdown.

10. A reagent registration method of an automatic analyzer, comprising:
a step of allowing a reading part to read reagent information that includes a kind of a reagent from an identifier attached to an unopened reagent container for storing a reagent;
a step of allowing a control unit to determine presence or non-presence of the partially used reagent container for storing a reagent of the same kind as the reagent stored in the unopened reagent container; and
a step of allowing the control unit to perform a control of assigning priority to use of the partially used reagent container than the unopened reagent container in a case where the partially used reagent container for storing the reagent of the same kind exists.
